# EUROPÄISCHE PATENTSCHRIFT

(11) **EP 3 323 134 B1**
(45) Veröffentlichungstag und Bekanntmachung des Hinweises auf die Patenterteilung: **02.06.2021**
(21) Anmeldenummer: 16729779.5
(22) Anmeldetag: 16.06.2016
(51) Int. Cl.: H01F 38/14, H01F 27/42, H02J 50/12

(54) **ANORDNUNG ZUR INDUKTIVEN ENERGIEÜBERTRAGUNG VON EINEM PRIMÄRLEITERSYSTEM AN EIN EINE SEKUNDÄRWICKLUNG AUFWEISENDES FAHRZEUG**
ARRANGEMENT FOR INDUCTIVE ENERGY TRANSMISSION FROM A PRIMARY CONDUCTOR SYSTEM TO A VEHICLE HAVING A SECONDARY WINDING
ENSEMBLE DE TRANSMISSION D'ÉNERGIE PAR INDUCTION D'UN SYSTÈME CONDUCTEUR PRIMAIRE À UN VÉHICULE PRÉSENTANT UN ENROULEMENT SECONDAIRE

(30) Priorität: 16.07.2015 DE 102015009074
(43) Veröffentlichungstag der Anmeldung: 23.05.2018
(73) Patentinhaber: SEW-EURODRIVE GmbH & Co. KG, 76646 Bruchsal (DE)
(72) Erfinder: PODBIELSKI, Leobald, 76199 Karlsruhe (DE); MAHLEIN, Jochen, 76139 Karlsruhe (DE); UHL, Thomas, 76646 Bruchsal (DE); BÖSER, Andreas, D-76646 Bruchsal (DE)
(86) Internationale Anmeldenummer: PCT/EP2016/001001
(87) Internationale Veröffentlichungsnummer: WO 2017/008875

(56) Entgegenhaltungen:
- WO-A1-2005/020405
- WO-A1-2008/031491
- DE-A1- 4 446 779

## Beschreibung

Die Erfindung betrifft eine Anordnung zur induktiven Energieübertragung von einem Primärleitersystem an ein eine Sekundärwicklung aufweisendes Fahrzeug.

Es ist allgemein bekannt, dass bei induktiven Energieübertragungen ein Primärleitersystem mit einem Wechselstrom beaufschlagt werden und somit elektrische Energie an ein zum Primärleitersystem induktiv gekoppelt vorgesehene Sekundärwicklung übertragbar ist.

**Aus der** WO 2008/031491 A1 **ist als nächstliegender Stand der Technik ein System zur berührungslosen Übertragung elektrischer Energie gezeigt, bei welchem eine Begrenzung auftretender Fehlerströme erreicht ist.**

**Aus der** DE 44 46 779 C1 **ist ein System zur berührungslosen Energieübertragung gezeigt, wobei ein U-förmiger Spulenkern einer Sekundärspule verwendet wird.**

**Aus der** WO 2005/020 405 A1 **ist eine Anordnung zur berührungslosen induktiven Energieübertragung gezeigt.**

Der Erfindung liegt daher die Aufgabe zugrunde, eine Anordnung zur induktiven Energieübertragung von einem Primärleitersystem an ein eine Sekundärwicklung aufweisendes Fahrzeug weiterzubilden, wobei die Sicherheit verbessert und die Verluste verringert werden sollen.

Erfindungsgemäß wird die Aufgabe bei der Anordnung nach den in Anspruch 1 angegebenen Merkmalen gelöst.

Wichtige Merkmale der Erfindung bei der Vorrichtung sind, dass die Anordnung zur induktiven Energieübertragung von einem Primärleitersystem, insbesondere stationär angeordnete Primärleitersystem, an ein eine Sekundärwicklung aufweisendes Fahrzeug ausgelegt ist,
wobei die Sekundärwicklung ans Primärleitersystem induktiv gekoppelt ist,
**wobei** der Primärleiter als langgestreckt verlegte Primärleiterschleife ausgeführt ist, die in einem Streckenabschnitt einen Hinleiter und einen Rückleiter, insbesondere einen dazu parallel verlegten Rückleiter, aufweist,
wobei der Rückleiter elektrisch geerdet ist, indem zumindest eine Induktivität zwischen dem Rückleiter und der elektrischen Erde angeordnet ist.

Von Vorteil ist dabei, dass für niederfrequente Ströme eine Erdung in einfacher Weise ausgeführt ist, aber für mittelfrequente Ströme kein Abfließen nach Erde bewirkt ist. Somit bleiben die mittelfrequenten Ströme im System und nutzbar zu induktiven Energieübertragung ans Fahrzeug.

Gemäß der Erfindung weist die Primärleiterschleife mehrere Streckenabschnitte auf, welche jeweils einen Hinleiter und einen Rückleiter aufweisen. Von Vorteil ist dabei, dass mehrere Streckenabschnitte ausbildbar sind und somit mehrere Fahrzeuge gleichzeitig induktiv versorgbar sind.

Bei einer vorteilhaften Ausgestaltung ist der Rückleiter, insbesondere der Rückleiter jeweils, als Außenleiter und der Hinleiter, insbesondere der Hinleiter jeweils, als Innenleiter ausgeführt. Von Vorteil ist dabei, dass der Außenleiter geerdet ist - zumindest für niederfrequente Stromanteile - und somit die Sicherheit erhöht ist.

Bei einer vorteilhaften Ausgestaltung ist die Induktivität derart dimensioniert, dass sie für Netzfrequenz, insbesondere also für eine Frequenz von 50 Hz oder 60 Hz, eine mindestens 100 fach, insbesondere 1000fach, kleinere Impedanz bewirkt. Von Vorteil ist dabei, dass für niedrige Frequenzen eine Erdung bewirkt ist und für hohe oder mittlere Frequenzen keine Stromanteile gegen Erde abfließen können.

Bei einer vorteilhaften Ausgestaltung umgibt der Rückleiter, insbesondere der Rückleiter jeweils, den Hinleiter, insbesondere den jeweiligen Hinleiter, in Umfangsrichtung, also senkrecht zur Bewegungsrichtung des Fahrzeugs, zumindest teilweise,
insbesondere so dass ein in Bewegungsrichtung sich erstreckender Schlitz am Rückleiter, insbesondere am jeweiligen Rückleiter, ausgebildet ist,
insbesondere wobei die Sekundärwicklung um einen U-förmigen Ferritkern ausgeführt ist, wobei die Schenkel des U in den Raumbereich jeweils zwischen Hinleiter und Rückleiter hineinragen oder sich erstrecken. Von Vorteil ist dabei, dass ein hoher Kopplungsgrad bei der induktiven Übertragung erreichbar ist. Denn der U-förmige Kern umschließt in Umfangsrichtung den Hinleiter fast ganz. In Leitungsrichtung ist der U-förmige Kern nur wenig ausgedehnt. Somit ist das Fahrzeug im Streckenabschnitt hin- und herbewegbar, insbesondere bei entsprechend großen Radien auch kurvengängig..

Bei einer vorteilhaften Ausgestaltung ist der Rückleiter, insbesondere der jeweilige Rückleiter, als Aluminium-Stranggussprofilteil ausgeführt und der Hinleiter, insbesondere der jeweilige Hinleiter, aus Litze, insbesondere HF-Litze, insbesondere Flachbandlitze,
insbesondere wobei die Ziehrichtung des Stranggussteils parallel zur Bewegungsrichtung des Fahrzeugs ausgerichtet ist. Von Vorteil ist dabei, dass eine Abstrahlung elektromagnetischer Wellen unterdrückt ist.

Bei einer vorteilhaften Ausgestaltung ist das Fahrzeug eine Einschienenbahn, insbesondere Einschienenhängebahn. Von Vorteil ist dabei, dass eine Förderanlage in einfacher Weise bereitstellbar ist. Insbesondere ist bei berührungsloser Versorgung ein verschleißarmer Betrieb erreichbar.

Gemäß der Erfindung sind die Rückleiter elektrisch verbunden mit einer Reihenschaltung aus Induktivitäten, wobei ein erster Anschluss der Reihenschaltung elektrisch mit dem Gehäuse einer Einspeiseeinheit zur Einspeisung eines mittelfrequenten Wechselstroms in die Primärschleife, verbunden ist,
wobei das Gehäuse elektrisch mit Erde, insbesondere elektrisch mit Erdpotential, verbunden ist. Von Vorteil ist dabei, dass das Gehäuse geerdet ist und die Rückleiter für niederfrequente Stromanteile ebenfalls geerdet sind.

Bei einer vorteilhaften Ausgestaltung sind die Induktivitäten der Reihenschaltung gleich. Von Vorteil ist dabei, dass ein einfacher Aufbau ausführbar ist.

Bei einer vorteilhaften Ausgestaltung ist die Induktivität vorteiligerweise derart dimensioniert, dass sie für den mittelfrequenten Strom einen mindestens 100-fach, insbesondere 1000-fach, höheren Widerstand darstellt als für den niederfrequenten Strom der Netzversorgung, also einen Strom mit 50 Hz oder 60Hz. Von Vorteil ist dabei, dass eine Erdung für niederfrequente Stromanteile, also auch für Gleichstromanteile, vorliegt, aber mittelfrequente oder hochfrequente Stromanteile nicht aus dem Rückleiter zur Erde abfließen können.

Die Erfindung wird nun anhand von Abbildungen näher erläutert:
In der Figur 1 ist eine **nicht von der Erfindung umfasste** Anlage zur induktiven Energieübertragung an einen vorzugsweise bewegbaren elektrischen Verbraucher dargestellt, wobei metallische Außenleiter 10 direkt mit Erde 19, also dem Anlagenerdpotential, verbunden sind.

In der Figur 2 ist eine ähnliche, **aber erfindungsgemäße** Anlage dargestellt, bei der die Erdung über jeweilige Induktivitäten ausgeführt ist.

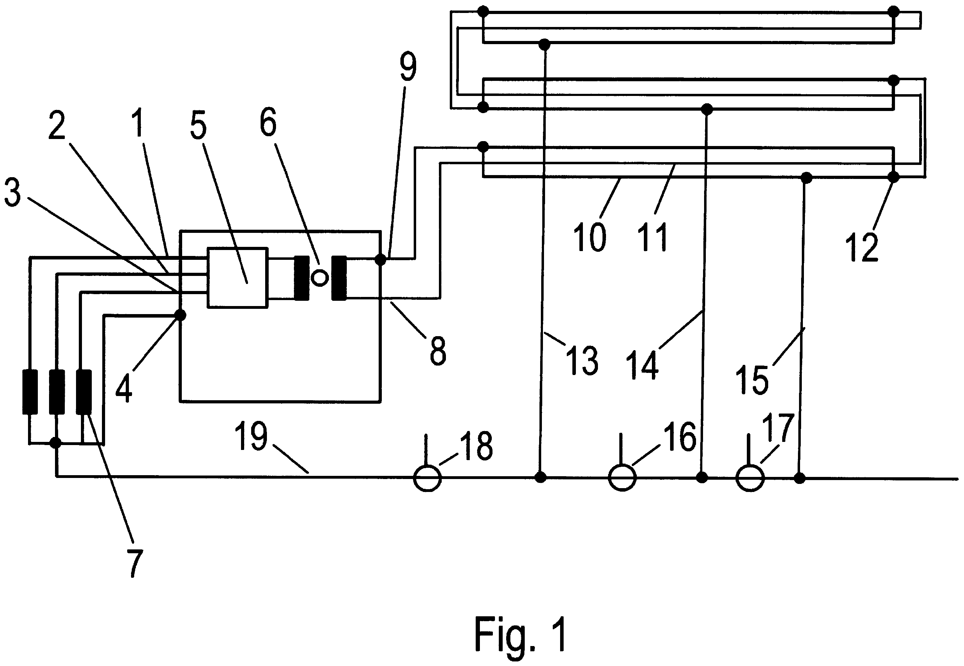

Wie in Figur 1 **zur Erläuterung des technischen Hintergrundes der Erfindung** gezeigt, ist eine in einer Anlage stationär angeordnete Einspeiseeinheit elektrisch mittels dreier Phasen (L1, L2, L3), also mittels eines Drehstromsystems, aus einem Ortsnetztransformator 7 versorgt, der eine Sternpunktserdung aufweist.

Dabei bildet der Sternpunkt die Erde 19, insbesondere das Anlagenerdpotential.

Der Ortsnetztransformator 7 ist aus einem Öffentlichen Versorgungsnetz gespeist, das beispielsweise eine Frequenz von 50 Hz oder 60 Hz aufweist.

Die Einspeiseeinheit weist eine mittelfrequente Wechselstromquelle, insbesondere AC/AC-Wandler, auf, wobei die Frequenz des erzeugten Wechselstroms zwischen 10 kHz und 1000 kHz beträgt.

Aus der Wechselstromquelle wird die Primärseite eines Transformators 6 gespeist, dessen Sekundärseite eine langgestreckt verlegte Primärleiterschleife versorgt. Dabei ist diese Schleife aus einem Hinleiter und einem Rückleiter zusammengesetzt.

Der Transformator 6 weist einen Anschluss 8 für den Hinleiter, insbesondere Innenleitung, auf und einen Anschluss 9 für einen Rückleiter, insbesondere Außenleitung.

Der Hinleiter 11 ist als langgestreckt verlegte Hochfrequenzlitze ausgeführt und/oder als Flachleiter ausgeführt.

Der Rückleiter 10 ist als Stranggussteil, insbesondere Aluminiumstranggussteil, ausgeführt. Dabei ist der Querschnitt vorzugsweise im Wesentlichen U-förmig. Die Stranggussrichtung oder Ziehrichtung des Profils ist parallel ausgerichtet zur Erstreckungsrichtung des Hinleiters 11 und des Rückleiters 10. Somit umgibt der Rückleiter 10 den Hinleiter 11 in Querrichtung zur Stranggussrichtung zumindest teilweise.

Wie in Figur 1 gezeigt weist die Anlage mehrere, insbesondere drei, Streckenabschnitte auf, wobei in jedem Streckenabschnitt jeweils ein Abschnitt des Hinleiters und des Rückleiters verlegt ist, wobei diese Abschnitte seriell miteinander elektrisch verbunden sind.

Entlang eines Streckenabschnittes ist ein Fahrzeug bewegbar, das eine Sekundärspule aufweist, die induktiv an den Primärleiter gekoppelt ist. Hierzu weist die Sekundärspule einen U-förmigen Kern, insbesondere Ferritkern, auf, der den Hinleiter 11 zumindest teilweise umgibt und zumindest teilweise vom Rückleiter 10 umgeben ist.

Somit ist eine induktive Versorgung eines bewegbaren Fahrzeugs ausführbar.

Jeder Rückleiter 10 ist jeweils über einen Schutzleiter (13, 14, 15) mit Erde 19 elektrisch verbunden. Dabei ist somit eine erhöhte Sicherheit erreichbar. Denn jeder Streckenabschnitt ist einzeln geerdet. Zur Erfassung der Erdschlussströme sind Stromerfassungsmittel (16, 17, 18) in jedem dem jeweiligen Streckenabschnitt zugeordneten Strompfad angeordnet. Auf diese Weise ist in jedem Streckenabschnitt ein jeweiliger Erdschlussstrom erfassbar.

Der Sekundärspule ist eine Kapazität in Reihe oder parallel zugeschaltet, so dass die Resonanzfrequenz des so gebildeten Schwingkreises der Frequenz des in den Primärleiter eingeprägten Wechselstromes zumindest im Wesentlichen entspricht. Auf dieses Weise ist ein hoher Wirkungsgrad bei der induktiven Energieübertragung erreichbar, auch wenn nur eine schwache induktive Kopplung vorliegt.

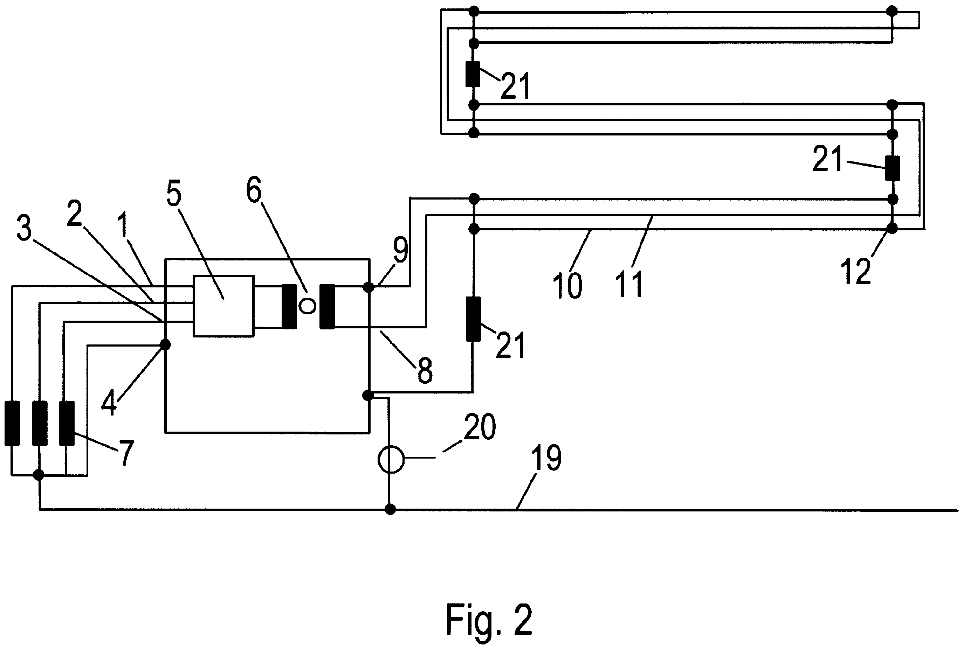

Im Unterschied zur Figur 1 ist im **erfindungsgemäßen** Ausführungsbeispiel nach Figur 2 nicht jeder Rückleiter 10 jedes Streckenabschnittes direkt mit Erde 19 verbunden sondern es sind Induktivitäten 21 zwischengeordnet.

Wie in Figur 2 gezeigt, ist der Rückleiter 10 eines ersten Streckenabschnitts über die Induktivität 21 mit Erde 19 verbunden. Der Rückleiter 10 eines zweiten Streckenabschnitts ist mittels einer Induktivität 21 mit dem Rückleiter 10 des ersten Streckenabschnitts verbunden. Auch der Rückleiter 10 eines dritten Streckenabschnitts ist mittels einer Induktivität 21 mit dem Rückleiter des zweiten Streckenabschnitts verbunden.

Somit bilden die Induktivitäten 21 eine Reihenschaltung, deren erster Anschluss mit Erde 19 verbunden ist und deren Knotenpunkte jeweils mit einem Rückleiter eines Streckenabschnitts verbunden sind.

Im Strompfad der Reihenschaltung ist ein Stromerfassungsmittel 20 angeordnet, so dass ein Erdschlussstrom detektierbar ist.

Der erste Anschluss ist mit dem metallischen Gehäuse der Einspeiseeinheit elektrisch verbunden. Somit ist auch die Einspeiseeinheit elektrisch geerdet.

Da dieses Stromerfassungsmittel 20 zwischen erstem Anschluss und Erde 19 angeordnet ist, ist der jeweilige, den Erdschluss auslösende Streckenabschnitt nicht identifizierbar. Der Erdschlussstrom der Anlage ist also nur insgesamt erfassbar.

Mittels der Induktivitäten 21 wird jedoch für mittelfrequente Stromanteile ein hoher Widerstand bereit gestellt, für niederfrequente Stromanteile jedoch ein niedriger Widerstand. Somit ist Erdung für niederfrequente Ströme wirksam aber für mittelfrequente Ströme nicht.

Die Induktivität ist vorteiligerweise derart dimensioniert, dass sie für den mittelfrequenten Strom einen mindestens 1000 fach höheren Widerstand darstellt als für den niederfrequenten Strom der Netzversorgung, also einen Strom mit 50 Hz oder 60Hz.

### Bezugszeichenliste

1 erste Phase des Versorgungsnetzes
2 erste Phase des Versorgungsnetzes
3 erste Phase des Versorgungsnetzes
4 PE-Anschluss der Einspeiseeinheit
5 Wechselstromquelle, insbesondere mittelfrequente Wechselstromquelle
6 galvanische Trennung, insbesondere Transformator
7 Ortsnetztransformator mit Sternpunktserdung
8 Anschluss Hinleiter, insbesondere Innenleitung
9 Anschluss Rückleiter, insbesondere Außenleitung
10 Rückleiter, insbesondere Außenleitung
11 Hinleiter, insbesondere Innenleitung
12 elektrischer Kontakt
13 Schutzleiter
14 Schutzleiter
15 Schutzleiter
16 Stromerfassungsmittel
17 Stromerfassungsmittel
18 Stromerfassungsmittel
19 Erde, insbesondere Anlagenerdpotential
20 Stromerfassungsmittel
21 Induktivität

## Patentansprüche

1. Anordnung zur induktiven Energieübertragung von einem Primärleitersystem, insbesondere stationär angeordnete Primärleitersystem, an ein eine Sekundärwicklung aufweisendes Fahrzeug,
wobei die Sekundärwicklung ans Primärleitersystem induktiv gekoppelt ist,
**wobei** der Primärleiter als langgestreckt verlegte Primärleiterschleife ausgeführt ist, die in einem Streckenabschnitt einen Hinleiter (11) und einen Rückleiter (10), insbesondere einen dazu parallel verlegten Rückleiter (10), aufweist,
wobei der Rückleiter (10) elektrisch geerdet ist, indem zumindest eine Induktivität (21) zwischen dem Rückleiter (10) und der elektrischen Erde (19) angeordnet ist,
**dadurch gekennzeichnet, dass**
**die Primärleiterschleife mehrere Streckenabschnitte aufweist, welche jeweils einen Hinleiter (11) und einen Rückleiter (10) aufweisen,**
**wobei die Rückleiter (10) elektrisch verbunden sind mit einer Reihenschaltung aus Induktivitäten (21), wobei ein erster Anschluss der Reihenschaltung elektrisch mit dem Gehäuse einer Einspeiseeinheit zur Einspeisung eines mittelfrequenten Wechselstroms in die Primärleiterschleife verbunden ist,**
**wobei das Gehäuse elektrisch mit Erde (19), insbesondere elektrisch mit Erdpotential, verbunden ist.**

2. Anordnung nach Anspruch 1,
**dadurch gekennzeichnet, dass**
der Rückleiter (10), insbesondere der Rückleiter (10) jeweils, als Außenleiter und der Hinleiter (11), insbesondere der Hinleiter (11) jeweils, als Innenleiter ausgeführt ist.

3. Anordnung nach mindestens einem der vorangegangenen Ansprüche,
**dadurch gekennzeichnet, dass**
**die Impedanz der Induktivität (21) auf Erde (19) für die Netzfrequenz deutlich kleiner ist als für die Mittelfrequenz, die für die Energieübertragung genutzt wird,**
**insbesondere** die Induktivität (21) derart dimensioniert ist, dass sie für Netzfrequenz, insbesondere also für eine Frequenz von 50 Hz oder 60 Hz, eine mindestens 100 fach, insbesondere 1000fach, kleinere Impedanz bewirkt.

4. Anordnung nach mindestens einem der vorangegangenen Ansprüche,
**dadurch gekennzeichnet, dass**
der Rückleiter (10), insbesondere der Rückleiter (10) jeweils, den Hinleiter (11), insbesondere den jeweiligen Hinleiter (11), in Umfangsrichtung, also senkrecht zur Bewegungsrichtung des Fahrzeugs, zumindest teilweise umgibt,
insbesondere so dass ein in Bewegungsrichtung sich erstreckender Schlitz am Rückleiter (10), insbesondere am jeweiligen Rückleiter (10), ausgebildet ist,
insbesondere wobei die Sekundärwicklung um einen U-förmigen Ferritkern ausgeführt ist, wobei die Schenkel des U in den Raumbereich jeweils zwischen Hinleiter (11) und Rückleiter (10) hineinragen oder sich erstrecken.

5. Anordnung nach mindestens einem der vorangegangenen Ansprüche,
**dadurch gekennzeichnet, dass**
der Rückleiter (10), insbesondere der jeweilige Rückleiter (10), als Aluminium-Stranggussprofilteil ausgeführt ist und der Hinleiter (11), insbesondere der jeweilige Hinleiter (11), aus Litze, insbesondere HF-Litze, insbesondere Flachbandlitze,
insbesondere wobei die Ziehrichtung des Stranggussteils parallel zur Bewegungsrichtung des Fahrzeugs ausgerichtet ist.

6. Anordnung nach mindestens einem der vorangegangenen Ansprüche,
**dadurch gekennzeichnet, dass**
das Fahrzeug eine Einschienenbahn, insbesondere Einschienenhängebahn, ist.

7. Anordnung nach mindestens einem der vorangegangenen Ansprüche,
**dadurch gekennzeichnet, dass**

8. Anordnung nach mindestens einem der vorangegangenen Ansprüche,
**dadurch gekennzeichnet, dass**
die Induktivitäten (21) der Reihenschaltung gleich sind.

9. Anordnung nach mindestens einem der vorangegangenen Ansprüche,
**dadurch gekennzeichnet, dass**
**die Impedanz der Induktivität (21) auf Erde (19) für die Netzfrequenz deutlich kleiner ist als für die Mittelfrequenz, die für die Energieübertragung genutzt wird,**
**insbesondere** die Induktivität (21) vorteiligerweise derart dimensioniert ist, dass sie für den mittelfrequenten Strom einen mindestens 100-fach, insbesondere 1000-fach, höheren Widerstand darstellt als für den niederfrequenten Strom der Netzversorgung, also einen Strom mit 50 Hz oder 60Hz.

10. Anordnung nach mindestens einem der vorangegangenen Ansprüche,
**dadurch gekennzeichnet, dass**
der Sekundärwicklung eine Kapazität derart parallel oder in Reihe zugeschaltet ist, dass die Resonanzfrequenz des so gebildeten Schwingkreises im Wesentlichen der Frequenz des in den Primärleiter eingeprägten Wechselstromes entspricht.

11. Anordnung nach mindestens einem der vorangegangenen Ansprüche,
**dadurch gekennzeichnet, dass**
die Induktivität (21) aus einem an **dem als Schiene ausgeführten Rückleiter (10),** befestigten Ringkern besteht, durch den der Schutzleiter (13, 14, 15) mehrmals hindurchgeführt wird, **welcher mit dem als Schiene ausgeführten Rückleiter (10) verbunden ist und mehrmals durch den Ringkern geführt ist.**
insbesondere wobei der Ringkern aus Ferrit besteht.

## Claims

1. An arrangement for inductive energy transmission from a primary conductor system, in particular a primary conductor system arranged in a stationary manner, to a vehicle having a secondary winding,
wherein the secondary winding is inductively coupled to the primary conductor system,
wherein the primary conductor is in the form of a primary conductor loop, laid in an elongated manner, which in a line portion has a feed conductor (11) and a return conductor (10), in particular a return conductor (10) laid parallel thereto,
wherein the return conductor (10) is electrically earthed in that at least one inductor (21) is arranged between the return conductor (10) and the electrical earth (19),
**characterised in that**
the primary conductor loop has a plurality of line portions which each have a feed conductor (11) and a return conductor (10),
wherein the return conductors (10) are electrically connected to a series circuit of inductors (21), wherein a first connection of the series circuit is electrically connected to the housing of a feeding unit for feeding a medium-frequency alternating current into the primary conductor loop,
wherein the housing is electrically connected to earth (19), in particular electrically connected to earth potential.

2. An arrangement according to claim 1,
**characterised in that**
the return conductor (10), in particular the respective return conductor (10), is configured as an outer conductor and the feed conductor (11), in particular the respective feed conductor (11), is configured as an inner conductor.

3. An arrangement according to at least one of the preceding claims,
**characterised in that**
the impedance of the inductor (21) to the earth (19) is clearly lower for the mains frequency than for the medium frequency used for the energy transmission,
in particular the inductor (21) is dimensioned in such a manner that it effects for mains frequency, in particular therefore for a frequency of 50Hz or 60 HZ, an impedance which is at least 100 times lower, in particular 1000 times lower.

4. An arrangement according to at least one of the preceding claims,
**characterised in that**
the return conductor (10), in particular the respective return conductor (10), at least partially surrounds the feed conductor (11), in particular the respective feed conductor (11), in the circumferential direction, therefore perpendicularly to the motion direction of the vehicle, in particular so that a slot, extending in the motion direction, is formed at the return conductor (10), in particular at the respective return conductor (10),
in particular wherein the secondary winding is provided about a U-shaped ferrite core, wherein the legs of the U project or extend into the spatial region which is in each case between feed conductor (11) and return conductor (10).

5. An arrangement according to at least one of the preceding claims,
**characterised in that**
the return conductor (10), in particular the respective return conductor (10), is made of a continuous casting shaped part of aluminium and the feed conductor (11), in particular the respective feed conductor (11), is made of stranded wire, in particular HF stranded wire, in particular ribbon stranded wire,
in particular wherein the drawing direction of the continuous casting part is oriented parallel to the motion direction of the vehicle.

6. An arrangement according to at least one of the preceding claims,
**characterised in that**
the vehicle is a monorail, in particular a suspended monorail.

7. An arrangement according to at least one of the preceding claims,
**characterised in that**

8. An arrangement according to at least one of the preceding claims,
**characterised in that**
the inductors (21) of the series circuit are uniform.

9. An arrangement according to at least one of the preceding claims,
**characterised in that**
the impedance of the inductor (21) to the earth (19) is clearly lower for the mains frequency than for the medium frequency used for the energy transmission,
in particular the inductor (21) is advantageously dimensioned in such a manner that it represents a resistance which is at least 100 times, in particular 1000 times, higher for the medium-frequency current than for the low-frequency current of the mains supply, therefore a current with 50 Hz or 60 Hz.

10. An arrangement according to at least one of the preceding claims,
**characterised in that**
a capacitor is connected in parallel or in series to the secondary winding in such a manner that the resonant frequency of the resonating circuit thus formed substantially corresponds to the frequency of the alternating current impressed upon the primary conductor.

11. An arrangement according to at least one of the preceding claims,
**characterised in that**
the inductor (21) consists of a ring core, secured to the return conductor (10) in the form of a rail, through which the protective conductor (13, 14, 15) is repeatedly guided, which protective conductor is connected to the return conductor (10), in the form of a rail, and is repeatedly guided through the ring core,
in particular wherein the ring core is made of ferrite.

## Revendications

1. Ensemble destiné à la transmission d'énergie par induction d'un système conducteur primaire, en particulier d'un système conducteur primaire fixe, à un véhicule comportant un enroulement secondaire, l'enroulement secondaire étant couplé par induction au système conducteur primaire,
le conducteur primaire étant conçu comme une boucle de conducteur primaire, posée de manière allongée, qui comporte un conducteur aller (11) et un conducteur retour (10), en particulier un conducteur retour (10) posé en parallèle, dans un tronçon de ligne,
le conducteur retour (10) étant mis électriquement à la terre du fait qu'au moins une inductance (21) est disposée entre le conducteur retour (10) et la terre électrique (19),
**caractérisé en ce que**
la boucle de conducteur primaire comporte une pluralité de tronçons de ligne qui comportent chacun un conducteur aller (11) et un conducteur retour (10),
les conducteurs retour (10) étant reliés électriquement à un circuit série d'inductances (21), une première borne du circuit série étant reliée électriquement au boîtier d'une unité d'alimentation destinée à injecter un courant alternatif moyenne fréquence dans la boucle de conducteur primaire,
le boîtier étant relié électriquement à la terre (19), en particulier électriquement au potentiel de terre.

2. Ensemble selon la revendication 1,
**caractérisé en ce que**
le conducteur retour (10), en particulier le conducteur retour respectif (10), est réalisé comme un conducteur extérieur et le conducteur aller (11), en particulier le conducteur aller respectif (11), est réalisé comme un conducteur intérieur.

3. Ensemble selon l'une au moins des revendications précédentes,
**caractérisé en ce que**
l'impédance de l'inductance (21) à la terre (19) pour la fréquence du réseau est nettement plus petite que pour la fréquence moyenne qui est utilisée pour la transmission d'énergie,
en particulier l'inductance (21) est dimensionnée de façon à avoir une impédance au moins 100 fois, en particulier 1000 fois, plus petite pour la fréquence du réseau, en particulier pour une fréquence de 50 Hz ou 60 Hz.

4. Ensemble selon l'une au moins des revendications précédentes,
**caractérisé en ce que**
le conducteur retour (10), en particulier le conducteur retour respectif (10), entoure au moins partiellement le conducteur aller (11), en particulier le conducteur aller respectif (11), dans la direction circonférentielle, c'est-à-dire perpendiculairement à la direction de déplacement du véhicule,
en particulier de façon à ménager une fente, s'étendant dans la direction de déplacement, au niveau du conducteur retour (10), en particulier du conducteur retour respectif (10),
en particulier, l'enroulement secondaire est conçu autour d'un noyau de ferrite en forme de U, les branches du U faisant saillie ou s'étendant dans l'espace entre le conducteur aller (11) et le conducteur retour (10).

5. Ensemble selon l'une au moins des revendications précédentes,
**caractérisé en ce que**
le conducteur retour (10), en particulier le conducteur retour respectif (10), est réalisé sous la forme d'une pièce profilée en aluminium coulée en continu et le conducteur aller (11), en particulier le conducteur aller respectif (11), est en fil toronné, en particulier en fil toronné HF, en particulier en fil toronné formant un ruban plat,
en particulier la direction de traction de la pièce coulée en continu étant orientée parallèlement à la direction de déplacement du véhicule.

6. Ensemble selon l'une au moins des revendications précédentes,
**caractérisé en ce que**
le véhicule est un monorail, en particulier un monorail aérien.

7. Ensemble selon l'une au moins des revendications précédentes,
**caractérisé en ce que**

8. Ensemble selon l'une au moins des revendications précédentes,
**caractérisé en ce que**
les inductances (21) du circuit série sont identiques.

9. Ensemble selon l'une au moins des revendications précédentes,
**caractérisé en ce que**
l'impédance de l'inductance (21) à la terre (19) pour la fréquence du réseau est nettement plus petite que pour la fréquence moyenne qui est utilisée pour la transmission d'énergie,
en particulier l'inductance (21) est avantageusement dimensionnée de façon à représenter au moins 100 fois, notamment 1000 fois, une résistance plus élevée pour le courant moyenne fréquence que pour le courant basse fréquence du réseau, soit un courant de 50 Hz ou 60 Hz.

10. Ensemble selon l'une au moins des revendications précédentes,
**caractérisé en ce que**
une capacité est montée en parallèle ou en série avec l'enroulement secondaire de telle sorte que la fréquence de résonance du circuit résonnant ainsi formé corresponde sensiblement à la fréquence du courant alternatif appliqué dans le conducteur primaire.

11. Ensemble selon l'une au moins des revendications précédentes,
**caractérisé en ce que**
l'inductance (21) est constituée d'un noyau toroïdal qui est fixé au conducteur retour (10) en forme de rail et qui est traversé plusieurs fois par le conducteur de protection (13, 14, 15) qui est relié au conducteur retour en forme de rail (10) et qui est passé plusieurs fois à travers le noyau toroïdal,
en particulier le noyau toroïdal étant en ferrite.
